# DEMANDE DE BREVET EUROPEEN

(11) **EP 1 625 998 A2**
(43) Date de publication de la demande: **15.02.2006**
(21) Numéro de dépôt: 05300612.8
(22) Date de dépôt: 22.07.2005
(51) Int. Cl.: B62M 3/00

(54) **Manivelle pour cycles**

(30) Priorité: 13.08.2004 FR 0408939
(71) Demandeur: STRONGLIGHT S.A., 42000 Saint-Etienne (FR)
(72) Inventeur: Crozet, Raymond, 42100 Saint Etienne (FR)
(74) Mandataire: Dupuis, François

(57) **Abrégé**

Cette manivelle est remarquable **en ce qu'elle** comprend deux composants, le corps de manivelle (1) et un bouclier (2) de protection qui sont agencés pour être assemblés et solidaires entre eux dans une configuration mâle-femêle, en définissant des zones d'appui et de contre appui, et de contact respectif, un moyen de liaison assurant leur tenue,
**et en ce que** le corps de manivelle est agencé à une extrémité avec une ouverture (1a) autorisant la fixation de l'axe de pédalier, et à son autre extrémité avec une configuration en forme de fourche,
**et en ce que** le bouclier (2) comprend une bague (2a) aménagée pour recevoir l'axe de pédale,
**et en ce que** l'extrémité en forme de fourche du corps de pédalier vient en butée contre la bague (2a) dans un assemblage complémentaire de contre appui.

## Description

L'invention se rattache au secteur technique des manivelles pour cycles.

Lesdites manivelles conçues à ce jour pour de nombreux fabricants sont soit en aluminium, soit en matériaux composites en carbone, et sont conçues monoblocs, avec une extrémité agencée pour recevoir un palier pour l'axe de pédale et l'autre extrémité pour être accouplée à l'axe de pédalier.

Cette fabrication en monobloc est ainsi conçue pour tout type d'applications aussi bien en vélo course, vélo de route, mais aussi vélos de randonnée et tous terrains.

De nombreux travaux et recherches ont été menés pour améliorer la rigidité de la manivelle en regard des contraintes d'utilisation en particulier en randonnée, VTT. A cet égard, les manivelles ont été conçues avec des matériaux composites type carbone. Cependant, les coûts d'obtention sont élevés. Malgré tout ce problème se pose le problème d'un éventuel arrachement de la manivelle par rapport au boîtier de pédalier lorsque les sollicitations sont très fortes.

La démarche du demandeur a donc été de reconsidérer de manière nouvelle et inattendue la conception même de la manivelle, tout en répondant aux différents critères de robustesse, de coût, mais aussi de légèreté.

Selon une première caractéristique, la manivelle deux composants, le corps de manivelle et un bouclier, ledit corps de manivelle et le bouclier étant agencés pour être assemblés et solidaires entre eux dans une configuration mâle-femêle, en définissant des zones d'appui et contre appui, et de contact respectif, un moyen de liaison assurant leur tenue.

Selon une autre caractéristique le corps de manivelle présente à son extrémité arrière un prolongement profilé dont l'épaisseur est moindre que l'épaisseur du reste du corps de manivelle en constituant la partie mâle d'assemblage du bouclier, l'extrémité arrière étant constituée en forme de fourche.

Ces caractéristiques et d'autres encore ressortiront bien de la suite de la description.

Pour fixer l'objet de l'invention, illustré de manière non limitative aux figures des dessins ou :

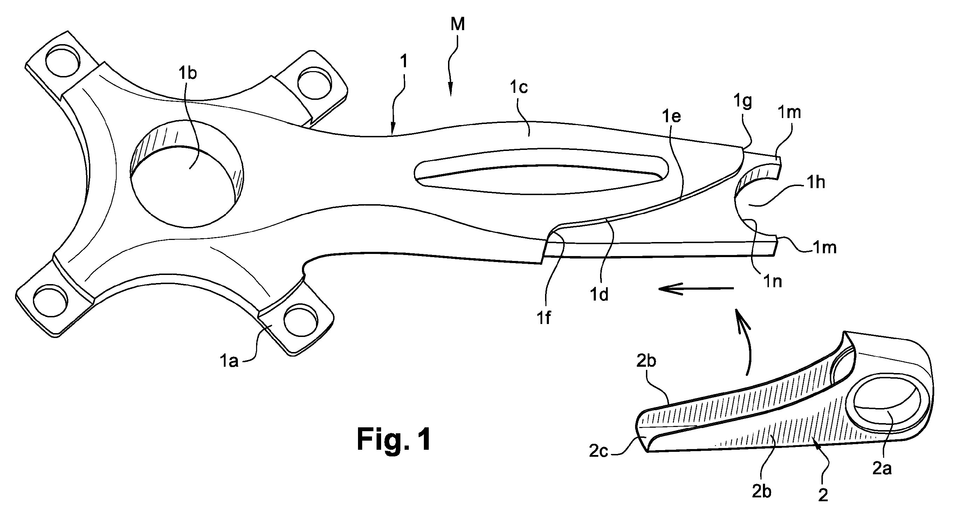

- La figure 1 est une vue en perspective d'une manivelle de cycle selon l'invention avant montage de ces deux composants, le bouclier et le corps de manivelle.

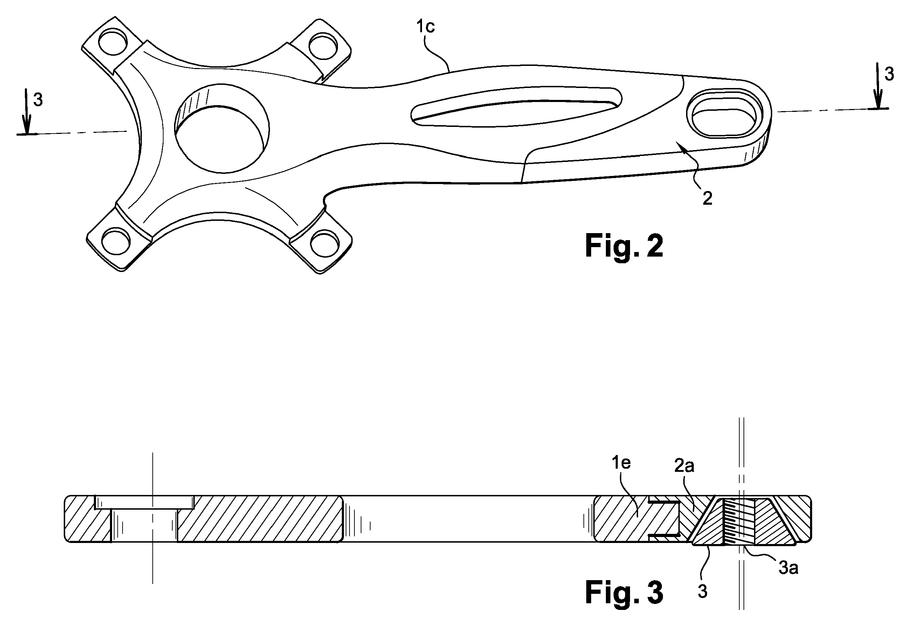

- la figure 2 est une vue selon la figure 1 après montage et formation de la manivelle dans son ensemble monobloc
- la figure 3 est une vue en coupe longitudinale selon l'invention, selon la figure 2, incluant une disposition complémentaire avec un insert réversible modifiant l'amplitude de pédalage.

Afin de rendre plus concret l'objet de l'invention, on le décrit maintenant d'une manière non limitative illustrée aux figures des dessins.

La manivelle pour cycle est référencée dans son ensemble par (M).

Elle comprend selon l'invention deux composants, le corps de manivelle (1) et un bouclier (2) de protection qui sont étroitement assemblés et solidarisés ; l'ensemble constituant un tout monobloc. On entend par manivelle aussi bien la manivelle droite qui permet la fixation des plateaux et une pédale que la manivelle gauche avec l'autre pédale.

Le corps de manivelle est aménagé pour la manivelle droite sur sa partie avant et de manière connue avec une pluralité de branches (1a) dont les extrémités servent à la fixation des plateaux. Egalement le corps de manivelle présente entre les branches une ouverture (1b) formant carré ou crantage d'entraînement de l'axe de pédalier. La manivelle gauche présente l'ouverture (1b) précitée pour s'accoupler à l'autre extrémité de l'axe de pédalier.

Selon l'invention, le corps de manivelle droite et gauche présente à son extrémité arrière un prolongement (1c) profilé dont l'épaisseur est moindre que l'épaisseur du reste du corps de manivelle pour constituer une partie mâle d'assemblage réceptrice d'un bouclier (2). A cet effet, ledit prolongement (1c) présente avantageusement une zone de butée (1d) formée sur le corps de manivelle avec une configuration curviligne (le), et de part et d'autre de celle-ci, et des formes en retour (1f-1g) opposées constituant les zones de contact complémentaires et d'appui du bouclier.

L'extrémité arrière (1h) est constituée en forme de fourche avec deux becs (1m) et une zone de raccordement (1n) entre eux.

Le corps de manivelle est réalisé en tout matériau approprié léger, du type aluminium ou autres composites.

Le bouclier (2) vient s'adapter sur le corps de manivelle dans la zone de réception définie précédemment et il définit et sert aussi de plan de fixation de l'axe de pédale.

Pour ce faire, ledit bouclier comprend une bague (2a) cylindrique ou oblongue aménagée pour recevoir l'axe de pédale. Cette bague (2a) est protégée par deux flasques (2b) identiques parallèles situés de chaque côté de la bague avec une zone de raccordement avec paroi de fond (2c). Ces flasques ont une forme complémentaire à la zone réceptrice formée sur le corps de manivelle pour venir s'encastrer sur elle dans un emboîtement mâle-femelle, tandis que la forme en fourche du corps de manivelle s'appuie sur la partie en regard de la bague. La liaison s'effectue par collage, adhésivage, et de manière générale, par tout moyen permettant une liaison fixe et rigide démontable ou non démontable.

Le bouclier est réalisé dans un matériau ayant des caractéristiques de résistance aux chocs supérieure à celles du corps de manivelle, en étant par exemple en acier ou autres alliages et matériaux.

Selon une disposition complémentaire la bague (2a) formée dans le bouclier est agencée dans une mise en oeuvre avantageuse et non limitative pour recevoir un insert (3) à profil complémentaire. Cet insert présente un trou taraudé (3a) qui peut être soit dans son plan axial, soit décalé pour recevoir l'axe de pédale. Ce décalage permet de positionner l'insert dans la bague selon deux positions permettant d'obtenir une amplitude dans le pédalage du cycliste.

Les avantages ressortent bien de l'invention. On souligne la nouvelle conception des manivelles droite-gauche, avec la possibilité d'une protection améliorée en cas de chocs sur le bouclier de protection. Un exemple de forme d'assemblage des deux composants a été décrit, d'une manière non limitative. Cette nouvelle configuration contribue aussi à donner une nouvelle apparence des manivelles, qui accessoirement peut être un paramètre décisionnel pour l'achat.

## Revendications

1. Manivelle pour cycle du type comprenant des composants montés dans un assemblage de liaison mâle-femelle par emboîtement, **caractérisée en ce qu'**elle comprend deux composants, le corps de manivelle (1) et un bouclier (2) de protection qui sont agencés pour être assemblés et solidaires entre eux dans une configuration mâle-femêle, en définissant des zones d'appui et de contre appui, et de contact respectif, un moyen de liaison assurant leur tenue,
**et en ce que** le corps de manivelle est agencé à une extrémité avec une ouverture (1a) autorisant la fixation de l'axe de pédalier, et à son autre extrémité avec une configuration en forme de fourche,
**et en ce que** le bouclier (2) comprend une bague (2a) aménagée pour recevoir l'axe de pédale,
**et en ce que** l'extrémité en forme de fourche du corps de pédalier vient en butée contre la bague (2a) dans un assemblage complémentaire de contre appui.

2. Manivelle, selon la revendication 1, **caractérisée en ce que** le corps de manivelle présente à son extrémité arrière un prolongement (1c) profilé dont l'épaisseur est moindre que l'épaisseur du reste du corps de manivelle en constituant la partie mâle d'assemblage du bouclier, l'extrémité arrière étant constituée en forme de fourche.

3. Manivelle selon la revendication 2, **caractérisée en ce que** ledit prolongement (le) présente une zone de butée (1d) avec une configuration curviligne (le), et de part et d'autre de celle-ci des formes en retour (1f - 1g) opposées constituant des zones de contact complémentaire et d'appui du bouclier.

4. Manivelle, selon la revendication 2 **caractérisée en ce que** l'extrémité arrière (1h) du corps de manivelle en forme de fourche comprend deux becs (1m) et une zone de raccordement (1n) entre eux, susceptible de venir en contact avec une partie complémentaire établie sur le bouclier.

5. Manivelle, selon l'une quelconque des revendications 1 à 4, **caractérisée en ce que** le bouclier (2) comprend une bague (2a) aménagée pour recouvrir l'axe de pédale, et deux flasques (2b) identiques (2b) parallèles situés de chaque côté avec une zone de raccordement avec paroi de fond (2c), lesdits flasques ayant une forme complémentaire à la zone réceptrice sur le corps de manivelle.

6. Manivelle, selon la revendication 1, **caractérisée en ce que** la liaison du corps de manivelle avec le bouclier s'effectue par collage.
